Europäisches Patentamt

(19) European Patent Office

Office européen des brevets

(11) Publication number: **0 019 335**

**A1**

# (12) EUROPEAN PATENT APPLICATION

(21) Application number: **80200426.7**

(22) Date of filing: **07.05.80**

(51) Int. Cl.³: **C 04 B 35/10**
**B 23 B 27/14**

(30) Priority: **10.05.79 NL 7903661**

(43) Date of publication of application:
**26.11.80 Bulletin 80/24**

(84) Designated Contracting States:
**DE FR GB IT NL SE**

(71) Applicant: **N.V. Philips' Gloeilampenfabrieken**
**Pieter Zeemanstraat 6**
**NL-5621 CT Eindhoven(NL)**

(72) Inventor: **Andreas, Frits Anton**
**c/o INT. OCTROOIBUREAU B.V. Prof. Holstlaan 6**
**NL-5656 AA Eindhoven(NL)**

(72) Inventor: **Krijtenburg, Gerben Sjoerd**
**c/o INT. OCTROOIBUREAU B.V. Prof. Holstlaan 6**
**NL-5656 AA Eindhoven(NL)**

(74) Representative: **Jelmorini, Pius Antonius et al,**
**INTERNATIONAAL OCTROOIBUREAU B.V. Prof.**
**Holstlaan 6**
**NL-5600 Eindhoven(NL)**

(54) Ceramic cutting tip for machining tools and method of production thereof.

(57) Machining tool consisting of $Al_2O_3$, containing finely dispersed $ZrO_2$ in a quantity of between 10 and 25% by weight and an addition of one or more grain growth inhibiting materials such as the oxides of Ni, Co, Cr, La and Y in a total quantity up to 1% by weight. The tool has a long service life.

EP 0 019 335 A1

"Tools for the machining of material."

The invention relates to tools for the machining of material, particularly for the machining of metals, comprising a ceramic cutting insert.

The handbook "Ceramics in Machining Processes" by A.G.King and W.M.Wheildon (Academic Press 1966, New York and London), pages XIII - XXI and 1-28, describes dense polycrystalline aluminium oxide having the corundum crystal structure, as a ceramic material for machining tools. The material contains additions which are used to refine the grain structure and/or as sintering agents, such as MgO, TiO and NiO. The advantages of this material as compared with material of high-speed steel inserts for machining tools reside in a greater hardness, a higher compressive strength and a higher operating temperature. A drawback, however, is the lower transverse breaking strength and the fact that the tool life is not as long as the high-speed steel.

The invention has for its object to provide a ceramic insert material for a machining tool, which ceramic material has a longer tool life, whilst retaining the above-mentioned advantages.

From an article by Nils Claussen et al, entitled: "Effect of induced microcracking on the fracture toughness of ceramics" in Ceramics Bulletin 56, 559-562 (1977), a ceramic material is known which has a great hardness and notch impact strength, this material consisting of sintered $Al_2O_3$ in which an unstabilized $ZrO_2$ is dispersed. The latter material exists in two crystal modifications, namely a monoclinic modification having a low density (5.56 $g/cm^3$) up to approximately 1000°C, and a tetragonal modification having a high density (6.10 $g/cm^3$) above that temperature. When material, which is isostatic hot-pressed above 1000°C, is cooled there is a tendency for the high-density tetragonal phase to be converted into the low-density monoclinic phase. As this is only partly possible, internal compressive stresses are produced which considerably increase the breaking strength of the material.

According to the invention it appeared that the properties required for the use of a ceramic material in a machining tool can be obtained in a simple manner, that is to say by sintering at atmospheric pressure in the presence of a grain growth inhibitor. Sintering may be performed at temperatures between 1450 and 1650°C when NiO and/or CoO is added to the starting material in a quantity of between approximately 0.02 and 0.2% by weight and/or one or more of the oxides $Cr_2O_3$, $La_2O_3$ and $Y_2O_3$ in a quantity of between 0.05 and 1 % by weight as grain growth inhibitors, the total quantity thereof not exceeding 1% by weight.

A grain growth inhibitor is essential to obtain the required properties.

According to the invention, a ceramic insert for a machining tool consisting of an aluminium oxide based ceramic material is characterized in that the ceramic material contains between 10 and 25% by weight of finely dispersed zirconium oxide and not more than 1% by weight of one or more grain growth inhibitors, the balance being $Al_2O_3$ and that the ceramic material has a porosity of less than 1% by volume. The grain growth inhibiting additive consists preferably of nickel oxide and/or cobalt oxide in a total quantity of between 0.02 and 0.2% by weight and/or one or more of the oxides of chromium (III), lanthanum and yttrium in a total quantity of between 0.05 and 1% by weight. The grain growth inhibitors should be present in at least an amount which is sufficient to function as such in the mixture. The minimum amount can be found experimentally.

The ceramic insert material is preferably produced from a mixture of dry-milled aluminium oxide having an average crystallite size of approximately 0.3 /um and zirconium oxide having a particle size of which at least 70% by weight is between 1 and 3 $\mu$m, and at least one of the oxides of nickel, cobalt, chromium, lanthanum and yttrium, this mixture being sintered at a temperature between 1450 and 1650°C, after having been shaped and compacted to a density of more than 2.2 $g/cm^3$.

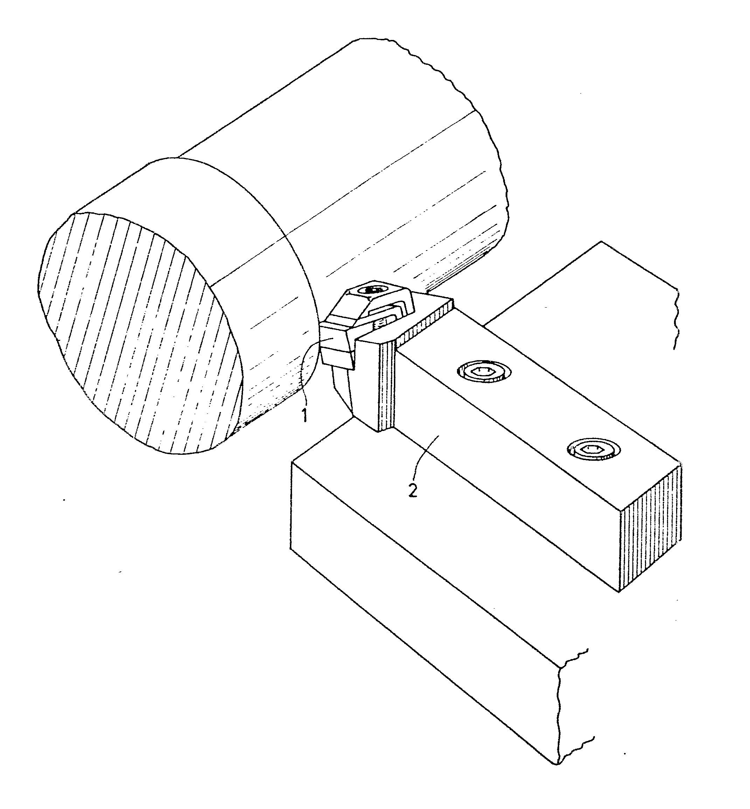

By way of example there now follows the description of the production of ceramic insert for a machining tool according to the invention. The sole Figure shows an important use, namely as a cutting insert in a machining tool in a lathe. The machining tool comprises a ceramic insert (1) clamped in the usual way in a holder (2).

25 kg aluminium oxide powder having an average crystallite size of 0.3 $\mu$m is placed in a ball mill having rubber-lined walls. The powder had been prepared by calcining ammonium-aluminium alum $(NH_4Al(SO_4)_2 \cdot 12H_2O)$. The powder is compacted to agglomerates by milling with 200 kg aluminium oxide balls, having a diameter of 3.6 cm for 8 hours.

Zirconium oxide to which nickel acetate and grinding means consisting of rejected ceramic insert material according to the invention has been added is wet-milled for $\frac{1}{2}$ hour in a vibratory mill, whereafter the $ZrO_2$ has a particle size approximately 75% by weight of which is between 1 and 3 $\mu$m. A typical mill batch has the following composition: 353 g zirconium oxide, 3.33 g nickel acetate, 800 g deionized water.

After milling this mixture for $\frac{1}{2}$ hour the following components are added to the contents of the vibratory ball mill:

2000 g aluminium oxide which had been dry-milled as described above,

1250 g deionized water and

38 g of a 55% by weight polymethyl methacrylate emulsion in water (commercial product) as a binder.

After milling for 30 minutes, the resulting suspension was passed through a 36 $\mu$m sieve and the sieved suspension is granulated by spray-drying. The granulate thus obtained has a poured powder density of 1.10-1.20 $g/cm^3$.

The granulate is shaped with a pressure of 3000 kg/cm$^2$ to a ceramic insert for a machining tool, the granulate being wetted with 3% by weight of deionized water immediately prior to pressing. The pressed density is 2.50-2.60 g/cm$^3$. The pressed products are thereafter sintered in a continuous furnace in air at a peak temperature of 1550-1600°C for 1 to 2 hours.

The shrinkage during this sintering operation is 16 to 17% and the density of the sintered material is 4.26 g/cm$^3$, from which it can be computed that the porosity is approximately 0.5% by volume. The average crystallite size is 3.0-3.5 μm.

After sintering the product is ground to size in accordance with the relevant standards.

The ceramic insert thus obtained is tested by using it to turn a plurality of workpieces of different shapes and different materials on a lathe and to compare the results with those obtained with a ceramic insert having an identical shape but consisting of sintered aluminium oxide of the same quality as defined above, but without the addition of zirconium oxide. The materials used for the workpieces are cast iron and unalloyed carbon steel. The workpieces consist of rods having one or more grooves extending longitudinally in the outer surface, so that the ceramic insert is subjected to a heavy load.

It was found that a ceramic insert according to the invention had a tool life which was 3 to 5 times as long as those of the aluminium oxide ceramic insert.

Comparable results are obtained with ceramic insert material containing one of the other above-mentioned oxides instead of nickel oxide.

CLAIMS:

1.       Ceramic insert for a machining tool consisting of an aluminium oxide based ceramic material characterized in that the ceramic material contains between 10 and 25% by weight of finely-dispersed zirconium oxide and not more than 1% by weight of one or more grain growth inhibitors, the balance being $Al_2O_3$ and that the ceramic material has a porosity of less than 1% by volume.

2.       A ceramic insert for a machining tool as claimed in Claim 1, characterized in that the grain growth inhibiting additive consists of nickel oxide and/or cobalt oxide in a total quantity of between 0.02 and 0.2% by weight and/or one or more of the oxides of chromium (III), lanthanum and yttrium in a total quantity of between 0.05 and 1% by weight.

3.       A method of producing material ceramic inserts for machining tools as claimed in Claim 1 or 2, characterized in that a mixture of dry-milled aluminium oxide having an average crystallite size of approximately 0.3 μm and zirconium oxide having a particle size of which at least 70% is between 1 and 3 μm, and at least one of the oxides of nickel, cobalt, chromium (III), lanthanum and yttrium is sintered at a temperature between 1450 and 1650°C after shaping and compacting to a density over 2.2 $g/cm^3$.

PHN 9455

| Category | Citation of document with indication, where appropriate, of relevant passages | Relevant to claim | CLASSIFICATION OF THE APPLICATION (Int. Cl. 3) |
|---|---|---|---|
| X | V.D.I.-ZEITSCHRIFT, vol. 121, nr. 5, March 1979, V.D.I.-Verlag DUSSELDORF (DE) H. GREWE et al.: "Schneidkeramik mit verbesserten Zähigkeitseigenschaften", pages 197-201 * Page 197, the whole content; page 198, left-hand column * -- | 1-3 | C 04 B 35/10 B 23 B 27/14 |
| X | GB - A - 2 004 267 (F. KRUPP G.m.b.H.) * Claims 1-3,5,6; page 1, lines 16-36; page 2, lines 25-65; page 3, lines 1-15 * -- | 1-3 | TECHNICAL FIELDS SEARCHED (Int.Cl.3) C 04 B 35/10 35/48 B 23 B 27/14 |
|  | DE - A - 2 736 982 (F. KRUPP G.m.b.H.) * Claims 1-5; page 4, the whole content ; page 6, lines 1-8 and 17-22 * -- | 1 |  |
|  | FR - A - 2 405 308 (FELDMUHLE AG) * Claims 1-4; page 3, lines 2-16; page 4, lines 3-10 * & DE - A - 2 744 700 & GB - A - 2 007 641 (published May 23, 1979) -- | 1-3 |  |
| A | WERKSTATT UND BETRIEB, vol. 108, nr. 5, May 1975, Carl Hanser Verlag MUNCHEN (DE) B. BELLMAN et al.: "Schneidstoffe - Entwicklungsstand und Anwendung", pages 257-271 * Page 265, right-hand column, chapter 4.1 * -- ./.. | 1 | CATEGORY OF CITED DOCUMENTS X: particularly relevant A: technological background O: non-written disclosure P: intermediate document T: theory or principle underlying the invention E: conflicting application D: document cited in the application L: citation for other reasons &: member of the same patent family, corresponding document |

The present search report has been drawn up for all claims

European Patent
Office

**EUROPEAN SEARCH REPORT**

| Category | Citation of document with indication, where appropriate, of relevant passages | Relevant to claim | CLASSIFICATION OF THE APPLICATION (Int. Cl. 3) |
|---|---|---|---|
| | **DOCUMENTS CONSIDERED TO BE RELEVANT** | | |
| A | <u>US - A - 3 377 176</u> (V.E. WOLKODOFF) <br><br> * Claims 1-13; column 2, lines 17-30 column 3, lines 38-55; column 7, lines 1-8 * <br> -- | 1-3 | |
| A | <u>US - A - 3 544 343</u> (I.M. LACHMAN) <br><br> * Claims 1-3,8,10 * <br> -- | 1-3 | |
| A | <u>US - A - 3 459 564</u> (I.M. LACHMAN) <br><br> * Claims 1,3,4 * <br> -- | 1-3 | TECHNICAL FIELDS SEARCHED (Int. Cl. 3) |
| A | <u>FR - A - 1 330 309</u> (C.I.C.E.) <br><br> * Résumé 1,2; page 1, the whole content * <br> ---- | 1-3 | |

EPO Form 1503.2  06.78